# EUROPÄISCHE PATENTANMELDUNG

(11) **EP 1 041 505 A2**
(43) Veröffentlichungstag der Anmeldung: **04.10.2000**
(21) Anmeldenummer: 00106756.0
(22) Anmeldetag: 29.03.2000
(51) Int. Cl.: G06K 7/08, B65F 3/00

(54) **Müllsackidentifikationssystem**

(30) Priorität: 30.03.1999 DE 29905840 U
(71) Anmelder: MOBA-Mobile Automation GmbH, 65604 Elz (DE)
(72) Erfinder: Schmidt, Andreas, 01309 Dresden (DE); Süss, Matthias, 01309 Dresden (DE)
(74) Vertreter: Schoppe, Fritz, Dipl.-Ing.

(57) **Zusammenfassung**

Ein Müllsackidentifikationssystem für ein Müllfahrzeug hat eine Einwurföffnung (104), durch die Müllsäcke in das Müllfahrzeug einfüllbar sind. Das Müllsackidentifikationssystem hat einen Transponder (108), der an einem Müllsack (106) angeordnet ist, und eine Antennenanordnung, die Signale von dem auf dem Müllsack (106) angeordneten Transponder (108) empfängt. Die Antennenanordnung hat mehrere separate Antennenelemente (110a, 110b, 110c, 110d), die derart benachbart zu der ein Einwurföffnung (104) angeordnet sind, daß beim Einwurf eines Müllsacks (106) durch die Einwurföffnung (104) in das Müllfahrzeug für zumindest eines der Mehrzahl von separaten Antennenelementen (110a, 110b, 110c, 110d) ein vorbestimmter Leseabstand (b) eingehalten ist, und eine Erfassungseinrichtung (114), die aufgrund der durch die Antennenanordnung empfangenen Signale Daten erfaßt, die in dem Transponder (108) gespeichert sind.

## Beschreibung

Die vorliegende Erfindung bezieht sich auf ein Müllsackidentifikationssystem, und insbesondere auf ein Müllsackidentifikationssystem für ein Müllfahrzeug.

Bereits seit einiger Zeit werden Identifikationssysteme zur Identifikation von Müllbehältern eingesetzt, um mittels dieser Technologie die Abrechnung der Müllabfuhrgebühren in Abhängigkeit von dem Gewicht oder der Leerungshäufigkeit eines mit einem Transponder ausgerüsteten Müllbehälters zu ermöglichen.

Derartige Identifikationssysteme dienen dazu, die von einem Transponder übermittelten Daten, z.B. eine Identifikationsnummer, die einem Haushalt zugeordnet ist, in einer Datenerfassungseinheit zu speichern und zu verarbeiten.

Die Identifikation des Müllbehälters erfolgt üblicherweise derart, daß während eines Entleerungsvorganges eine definierte räumliche Zuordnung zwischen Transponder und Antenne erforderlich ist, wobei in diesem Fall die Lage des Transponders bezüglich der Antenne so gewählt sein muß, daß ein sicherer Lese- oder Erkennungsbereich erreicht wird, so daß die gespeicherten Daten sicher erfaßt werden können.

Diese bekannten Systeme sind dahingehend nachteilhaft, daß es erforderlich ist, daß der Müllbehälter eine definierte Lage bezüglich der Antenne einnehmen muß.

Zur Lösung dieser Problematik wurden im Stand der Technik bereits Möglichkeiten vorgeschlagen, mittels denen eine Entleerung des Müllbehälters auf einfache Art und Weise sichergestellt wird, ohne daß es auf eine vorbestimmte Lage desselben beim Auslegen ankommt.

So beschreibt beispielsweise die DE 197 08 204 A1 ein Behälteridentifikationssystem für ein Seitenladermüllfahrzeug mit Greifarmen, bei dem an einem Greifarm eine beweglich angeordnete Antennenanordnung vorgesehen ist, die beim Ergreifen eines Müllbehälters mittels des Greifarms zu dem Müllbehälter bewegt wird, so daß eine sichere Auslesung der Transponderdaten möglich ist.

Die DE 197 08 235 A1 beschreibt ein Behälteridentifikationssystem für ein Seitenladermüllfahrzeug, bei dem sich eine Antenne vollständig um eine Einfüllöffnung herum erstreckt, so daß unabhängig von der Lage des Müllbehälters das Auslesen der Transponderdaten sichergestellt ist.

Die oben beschriebenen Lösungsvorschläge aus dem Stand der Technik arbeiten gut für Müllbehälter in der Form von Mülltonnen oder solcher Behälter, bei denen lediglich deren Inhalt in das Müllfahrzeug entladen wird. Nachdem diese Behälter lediglich entleert werden, d.h. deren Inhalt wird in das Müllfahrzeug eingefüllt, weisen bekannte Müllfahrzeuge entsprechend dimensionierte Öffnungen auf, an welche die entsprechenden Müllbehälter herangeführt und gekippt werden, so daß sich deren Inhalt in das Müllfahrzeug ergießt. Durch diese Anordnung ist während des Einfüllvorgangs eine definierte Lage des Müllbehälters zum Müllfahrzeug festgelegt, so daß durch eine entsprechende Anordnung der Antenne ein korrekter Abstand zwischen dem Transponder und der Antenne festgelegt werden kann, um ein sicheres Auslesen der Transponderdaten zu gewährleisten.

Werden jedoch anstelle der Müllbehälter sogenannte Müllsäcke verwendet, sind die oben beschriebenen Systeme nicht einsetzbar und deren Verwendung bringt erhebliche Nachteile mit sich. Müllfahrzeuge, die zum Abtransport von Müllsäcken ausgelegt sind, weisen entsprechende Öffnungen auf, durch die die Müllwerker die Müllsäcke in das Innere des Müllfahrzeugs einwerfen. Daher müssen die entsprechenden Öffnungen ausreichend groß dimensioniert sein. Da die einzelnen Säcke in beliebiger Ausrichtung eingeworfen werden, fehlt es an einer festgelegte örtlichen Beziehung zwischen dem Müllsack und dem Müllfahrzeug. Daher kann beim Einsatz von Müllsäcken mit einem Transponder nicht sichergestellt werden, daß eine Auslesung der Transponderdaten erfolgt, da der erforderliche Leseabstand nicht sicher eingehalten ist.

Ausgehend von diesem Stand der Technik liegt der vorliegenden Erfindung die Aufgabe zugrunde, ein verbessertes Müllsackidentifikationssystem zu schaffen, welches die sichere Erfassung von Daten auf einem Transponder auf einem Müllsack ermöglicht.

Diese Aufgabe wird durch ein Müllsackidentifikationssystem gemäß Anspruch 1 gelöst.

Die vorliegende Erfindung schafft ein Müllsackidentifikationssystem für ein Müllfahrzeug, das eine Einwurföffnung aufweist, durch die Müllsäcke in das Müllfahrzeug einfüllbar sind, mit einem Transponder, der an einem Müllsack angeordnet ist, einer Antennenanordnung, die Signale von dem auf dem Müllsack angeordneten Transponder empfängt, wobei die Antennenanordung eine Mehrzahl von separaten Antennenelementen umfaßt, die derart benachbart zu der Einwurföffnung angeordnet sind, daß beim Einwurf eines Müllsacks durch die Einwurföffnung in das Müllfahrzeug für zumindest eines der Mehrzahl von separaten Antennenelementen ein vorbestimmter Leseabstand eingehalten ist, und einer Erfassungseinrichtung, die aufgrund der durch die Antennenanordnung empfangenen Signale Daten erfaßt, die in dem Transponder gespeichert sind.

Der Vorteil der vorliegenden Erfindung besteht darin, daß auch Müllsäcke, die per Hand in eine vorgesehene Öffnung am Müllfahrzeug geworfen werden, bei deren Abtransport identifiziert werden, indem der auf den Müllsäcken angeordnete Transponder omnidirektional ausgelesen wird.

Bevorzugte Ausführungsbeispiele der vorliegenden Erfindung sind in den Unteransprüchen definiert.

Ein bevorzugtes Ausführungsbeispiel der vorliegenden Erfindung wird nachfolgend unter Bezugnahme auf die beiliegenden Zeichnungen näher erläutert. Es zeigen:
- Fig. 1: eine schematische Darstellung des erfindungsgemäßen Müllsackidentifikationssystems; und
- Fig. 2: eine schematische Darstellung des Einwurfs eines Müllsacks durch eine Einwurföffnung eines Müllfahrzeugs.

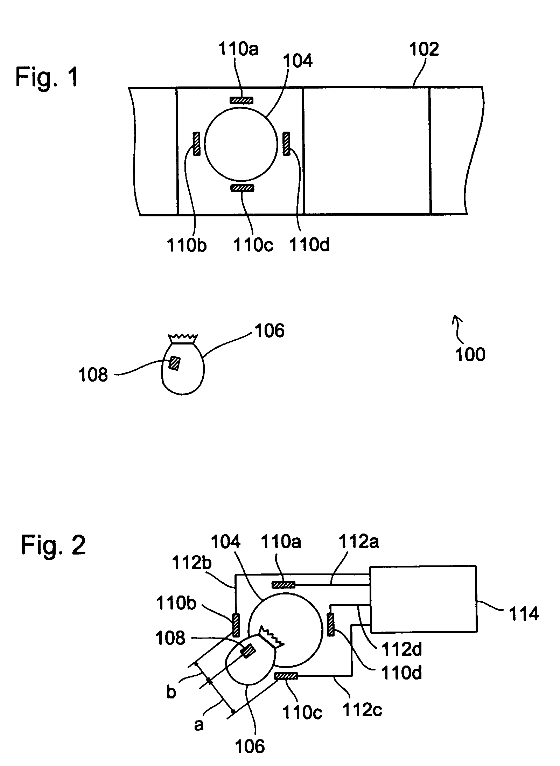

In Fig. 1 ist das erfindungsgemäße Müllsackidentifikationssystem schematisch dargestellt, und ist in seiner Gesamtheit mit dem Bezugszeichen 100 bezeichnet.

Schematisch ist ein Abschnitt 102 eines Müllfahrzeugs dargestellt, z.B. eine Seitenwand. In dem Abschnitt 102 des Müllfahrzeugs ist eine Einwurföffnung 104 vorgesehen, durch welche Müllsäcke 106 in das Innere des Müllfahrzeugs eingeworfen werden können.

Ein Transponder 108 ist auf dem Müllsack 106 angeordnet und enthält die erforderlichen Identifikationsdaten, die beispielsweise zur Abrechnung der Müllentsorgung herangezogen werden.

Benachbart zu der Öffnung 104 sind bei dem in Fig. 1 gezeigten Beispiel vier separate Antennenanordnungen 110a bis 110d vorgesehen, die beim Einwurf des Müllsacks 106 durch die Öffnung 104 Daten bzw. Signale von dem Transponder 108 empfangen und diese an eine (nicht dargestellte) Erfassungseinrichtung weitergeben.

Bei dem in Fig. 1 dargestellten Transponder 108, der auf einem Müllsack 106 vorgesehen ist, handelt es sich vorzugsweise um sogenannte Einwegtransponder, also solche Transponder, welche lediglich nur einmal verwendet werden, die bevorzugterweise als "Label" oder in der Form eines Etiketts auf die Müllsäcke 106 aufgeklebt werden, wobei entweder vor oder nach dem Aufkleben die entsprechenden Daten für die Abrechnung gespeichert werden.

In Fig. 2 ist die Situation beim Einwurf eines Müllsacks 106 in die Öffnung 104 näher dargestellt. Wie zu erkennen ist, sind die entsprechenden Antennenelemente über Leitungen 112a bis 112d mit der Erfassungseinrichtung 114 verbunden.

In Fig. 2 ist die Problematik beim Identizieren von Müllsäcken zu erkennen, da die Tansponder beim Einwurf eine ansich beliebige Ausrichtung bezüglich der Öffnung 104 bzw. der einzelnen Antennenelemente annehmen können, so daß die aus dem Stand der Technik bekannten Identifikationssysteme hier nicht einsetzbar sind.

Gemäß der vorliegenden Erfindung ist die Antennenanordnung durch die Mehrzahl von Antennenelementen 110a bis 110d gebildet. Bei der in Fig. 2 gezeigten Situation ist ein Abstand a zwischen dem Transponder 108 und dem Antennenelement 110c zu groß, liegt also über dem zulässigen Leseabstand, so daß mittels des Antennenelements 110c keine Daten aus dem Transponder 108 ausgelesen werden können. Gleiches gilt für die Elemente 110a und 110d, die ebenfalls zu weit von dem Transponder 108 beabstandet sind. Der Transponder 108 ist von dem Antennenelement 110b um einen Abstand b beabstandet, der kleiner oder gleich dem Leseabstand ist, so daß durch das Antennenelement 110b sicher Signale von dem Transponder 108 beim Einwurf des Sackes in die Öffnung 104 empfangen werden, die anschließend über die Leitung 112b an die Erfassungseinrichtung 114 weitergeleitet werden, die aufgrund der von der Antenne empfangenen Signale entsprechende Daten erfaßt.

Wie aus Fig. 2 zu erkennen ist, sind die jeweiligen separaten Antennenelemente 110a bis 110 d derart angeordnet, daß sichergestellt ist, daß beim Einwurf eines Sacks 106 der entsprechende Abstand des Transponders 108 zu zumindest einer der Antennen so ist, daß ein sicheres Auslesen ermöglicht wird. Anstelle der in Fig. 2 dargestellten Konfiguration können auch Antennenanordnungen mit zwei, drei oder mehr als vier separaten Antennenelementen verwendet werden.

Wie aus der obigen Beschreibung der Fig. 1 und 2 zu erkennen ist, ermöglicht die vorliegende Erfindung die sichere Identifikation von Säcken, die per Hand in eine vorgesehene Öffnung 104 an einem Müllfahrzeug eingeworfen werden. Die erfindungsgemäße Identifikationstechnik ist hierbei in der Lage, omnidirektional den Transponder 108 zu lesen, was erforderlich ist, da im Gegensatz zur Identifikation von Mülltonnen, die Plazierung Transponder-Antenne nicht vordefinierbar ist. Wie aus Fig. 2 zu erkennen ist, ist die Einwurföffnung 104 für die Müllsäcke 106 derart ausgeführt, daß der mögliche Leseabstand für den Transponder 108 für zumindest ein Antennenelement nicht überschritten wird. In diesem Zusammenhang muß gleichzeitig sichergestellt sein, daß die Säcke problemlos eingeworfen werden können. Die an der Einwurföffnung 104 vorgesehenen Antennenelemente arbeiten in einer synchronisierten Art und Weise.

Bei den verwendeten Transpondern, handelt es sich beispielsweise um sogenannten Label-Transponder, also kostengünstige Transponder, die lediglich einmal Verwendung finden.

## Patentansprüche

1. Müllsackidentifikationssystem für ein Müllfahrzeug, das eine Einwurföffnung (104) aufweist, durch die Müllsäcke in das Müllfahrzeug einfüllbar sind, mit
einem Transponder (108), der an einem Müllsack (106) angeordnet ist;
einer Antennenanordnung, die Signale von dem auf dem Müllsack (106) angeordneten Transponder (108) empfängt, wobei die Antennenanordnung eine Mehrzahl von separaten Antennenelementen (110a, 110b, 110c, 110d) umfaßt, die derart benachbart zu der ein Einwurföffnung (104) angeordnet sind, daß beim Einwurf eines Müllsacks (106) durch die Einwurföffnung (104) in das Müllfahrzeug für zumindest eines der Mehrzahl von separaten Antennenelementen (110a, 110b, 110c, 110d) ein vorbestimmter Leseabstand (b) eingehalten ist; und
eine Erfassungseinrichtung (114), die aufgrund der durch die Antennenanordnung empfangenen Signale Daten erfaßt, die in dem Transponder (108) gespeichert sind.

2. Müllsackidentifikationssystem nach Anspruch 1, bei der die Antennenanordnung zwei oder vier separate, synchronisiert arbeitende Antennenelemente umfaßt.

3. Müllsackidentifikationssystem nach Anspruch 1 oder 2, bei der der Transponder (108) zur einmaligen Verwendung ausgelegt ist und in der Form eines Etiketts auf den Müllsack (106) aufgeklebt ist.
